# EUROPÄISCHE PATENTANMELDUNG

(11) **EP 2 511 550 A2**
(43) Veröffentlichungstag der Anmeldung: **17.10.2012**
(21) Anmeldenummer: 12163843.1
(22) Anmeldetag: 12.04.2012
(51) Int. Cl.: F16C 33/44

(54) **Wälzlagerkäfig und Verfahren zum Herstellen eines Wälzlagerkäfigs**

(30) Priorität: 15.04.2011 DE 102011007495
(71) Anmelder: Aktiebolaget SKF, 41 550 Göteborg (SE)
(72) Erfinder: Krause, Thomas, 97506 Grafenrheinfeld (DE)
(74) Vertreter: Schonecke, Mitja

(57) **Zusammenfassung**

Ein Wälzlagerkäfig (100) zur Aufnahme eines Wälzkörpers gemäß einem Ausführungsbeispiel umfasst wenigstens eine Tasche (130) für den Wälzkörper, wobei der Wälzlagerkäfig (100) aus einem Material gefertigt ist, das ein Thermoplast mit einer Kohlenstofflangfaserverstärkung und/oder einer Glaslangfaserverstärkung umfasst.

## Beschreibung

Ausführungsbeispiele betreffen einen Wälzlagerkäfig und Verfahren zum Herstellen eines Wälzlagerkäfigs.

Bei vielen Maschinen und Baugruppen treten Relativbewegungen eines Bauteils bezogen auf ein anderes Bauteil derselben oder einer anderen Maschine oder Baugruppe der Maschine auf. Hierbei kann es sich um eine Drehbewegung oder eine lineare Bewegung handeln. Hierbei besteht sehr häufig das Bestreben, die betreffenden Bauteile hinsichtlich der Relativbewegung zu führen, Kräfte und/oder Drehmomente, die in einer Richtung senkrecht zu der Richtung der Relativbewegung auftreten, jedoch weiterzuleiten. Anders ausgedrückt besteht bei vielen Maschinen das Bestreben, die Relativbewegung der betreffenden Bauelemente zu lagern. Zu diesem Zweck werden Lager eingesetzt. Je nach Art der Relativbewegung kann sich hierbei um ein Linearlager oder auch ein Lager für Drehbewegungen handeln.

Hierbei wird zwischen Gleitlagern und Wälzlagern unterschieden. Bei Ersteren erfolgt die Führung der Bewegung über Gleitbahnen, während bei Zweiten die Wälzkörper zwischen zwei Laufbahnen des Wälzlagers abrollen und sich daher relativ zu beiden Laufbahnen bewegen. Gerade bei Wälzlagern werden die Wälzkörper häufig in einem Wälzlagerkäfig in entsprechenden Taschen eingesperrt bzw. festgehalten.

Der Wälzlagerkäfig beeinflusst hierbei wesentlich die Eignung des Wälzlagers für einen bestimmten Anwendungsfall. Zu seinen Hauptaufgaben zählt so unter anderem ein Halten der Wälzkörper auf Abstand, um so eine unmittelbare Berührung zwischen benachbarten Wälzkörpern zu verhindern, was die Reibung und damit die Wärmeentwicklung im Lager verringert. Er kann ferner für eine gleichmäßige Verteilung der Wälzkörper über den gesamten Umfang sorgen und so eine gleichmäßige Lastverteilung sowie einen ruhigeren und gleichmäßigeren Lauf des Wälzlagers und der entsprechenden Maschine ermöglichen. Er kann die Wälzkörper gegebenenfalls auch in der entlasteten Zone führen und kann dadurch gegebenenfalls die Abrollbedingungen im Lager verbessern und schädliche Gleitbewegungen vermeiden. Auch kann er ein Herausfallen von Wälzkörpern gegebenenfalls bei einem Einbau oder einem Ausbau eines nicht selbsthaltenden Lagers verhindern.

Wälzlagerkäfige werden durch Reibungs-, Zerr- und Trägheitskräfte mechanisch beansprucht. Formgebung und Werkstoffwahl sind deshalb für die Funktionstüchtigkeit des Wälzlagerkäfigs ebenso wie für die Betriebszuverlässigkeit des Lagers insgesamt von entscheidender Bedeutung.

Bei manchen Anwendungen können Wälzlagerkäfige sehr großen Kräften ausgesetzt sein. Zu diesen zählen beispielsweise Lager mit großen Abmessungen, Wälzlager bestimmter Bauart (z. B. Pendelrollenlager (SRB = engl.: Spherical Roller Bearing)), sowie Wälzlager für bestimmte Anwendungsfälle, zu denen beispielsweise Kompressoren und andere Anwendungen mit einer hohen Drehzahl und/oder einer hohen statischen oder dynamischen Belastung zählen.

Konventionell werden gerade für diese Anwendungsfälle andere Käfigwerkstoffe, insbesondere Messing und Stahlblech verwendet. Diese Käfigwerkstoffe können zwar grundsätzlich die geforderten mechanischen Eigenschaften erfüllen, weisen jedoch andere negative Eigenschaften auf. So weisen die aus ihnen gefertigten Bauteile häufig ein hohes Gewicht und eine hohe Reibung aufweisen. Darüber hinaus können sie aufwendig und teuer in der Herstellung sein.

Eine kostengünstige und/oder wirtschaftliche Herstellung kann beispielsweise mithilfe eines Spritzgießverfahrens erfolgen, bei der ein Kunststoff durch Temperatur und/oder Druck plastifiziert wird. Zu den hierfür verwendbaren Kunststoffen zählen beispielsweise die Thermoplaste.

Die so erzeugten konventionellen Kunststoffkäfige können bisher diese mechanischen Eigenschaften nicht ermöglichen. Eine hohe Zugfestigkeit sowie Steifigkeit des Käfigmaterials zur Erzielung einer geringen Verformung unter Beanspruchung einerseits - beispielsweise in Form hoher Zentrifugalkräfte -, sowie eine gleichzeitige hohe Zähigkeit und hohe Bruchdehnung zur Erzielung hoher Schlagfestigkeiten bei auftretenden Stoßbeanspruchungen andererseits stellen mehrere, zum Teil konträre Anforderungen an Wälzlagerkäfige und ihr Material dar. Erhältliche Thermoplaste können diese Anforderungen nicht gleichzeitig erfüllen.

Bei konventionellen kurzfaserverstärkten Thermoplasten nehmen so bei Erhöhung des Anteils an Glas- oder Kohlefasern (Kohlenstofffasern) zwar die Zugfestigkeit und Steifigkeit des Kunststoffes zu, die für stark beanspruchte Lagerkäfige ratsame hohe Bruchdehnung und/oder Zähigkeit reduziert sich jedoch mit zunehmendem Faseranteil und kann so zu sprödem Materialverhalten führen. Hierdurch kann es zu einem Käfigbruch durch Überschreitung der Bruchdehnung kommen.

Wird hingegen der Faseranteil in dem Thermoplast reduziert, um eine konstruktiv vorgeschriebene Bruchdehnung einzuhalten, sinken typischerweise Zugfestigkeit und Steifigkeit, also beispielsweise das Elastizitätsmodul oder E-Modul, stark ab, was zu einem Käfigbruch durch ein Überschreiten der Bruchspannung führen kann.

Andererseits zeichnen sich Kunststoffkäfige jedoch durch gute Gleiteigenschaften auf geschmierten Stahlflächen und eine geringe Rauheit der Käfigoberflächen an den Berührungsstellen mit den Wälzkörpern aus. Häufig haben sie eine im Vergleich zu Metallkäfigen niedrigere Käfigreibung und damit eine entsprechend geringere Wärmeentwicklung im Lager, was sich auch auf den Verschleiß positiv auswirkt. Darüber hinaus weisen sie eine im Vergleich zu Metallen geringere Werkstoffdichte auf, sodass die Kräfte aus der Massenträgheit des Käfigs kleiner sind. Auch können sie gegebenenfalls über gute Notlaufeigenschaften verfügen, sodass ein Lager selbst bei einem völligen Versagen der Schmierung noch für einige Zeit funktionsfähig beleiben kann, ohne dass es zum Blockieren des Lagers oder anderen Schäden kommt.

Es besteht daher ein Bedarf, einen Wälzlagerkäfig aus einem Material bereitzustellen, das Eigenschaften eines Kunststoffwälzlagers mit einer verbesserten Steifigkeit und/oder Zugfestigkeit und gleichzeitig einer verbesserten Zähigkeit und/oder Schlagfestigkeit aufweist.

Diesem Bedarf wird durch einen Wälzlagerkäfig gemäß Anspruch 1 und ein Verfahren zum Herstellen eines Wälzlagerkäfigs gemäß Anspruch 8 Rechnung getragen.

Ein Wälzlagerkäfig zur Aufnahme eines Wälzkörpers gemäß einem Ausführungsbeispiel umfasst wenigstens eine Tasche für den Wälzkörper, wobei der Wälzlagerkäfig aus einem Material gefertigt ist, das ein Thermoplast mit einer Kohlenstofflangfaserverstärkung und/oder einer Glaslangfaserverstärkung umfasst.

Ein Verfahren zum Herstellen eines Wälzlagerkäfigs gemäß einem Ausführungsbeispiel umfasst ein Bereitstellen eines Materials, das ein Thermoplast mit einer Kohlenstofflangfaserverstärkung und/oder einer Glaslangfaserverstärkung umfasst, und ein Formen des Wälzlagerkäfigs aus dem Material.

Ausführungsbeispielen liegt die Erkenntnis zugrunde, dass die Eigenschaften eines Wälzlagerkäfigs aus einem Material, das ein Thermoplast umfasst, mit einer verbesserten Steifigkeit und/oder Zugfestigkeit und einer gleichzeitigen Verbesserung der Zähigkeit und/oder der Schlagfestigkeit dadurch erzielt werden kann, indem der Wälzlagerkäfig aus einem Material gefertigt wird, das ein Thermoplast mit einer Langfaserverstärkung aus Kohlenstoff und/oder Glas aufweist. Die die Langfaserverstärkung bildenden Fasern tragen aufgrund ihrer im Vergleich zu dem als Matrix dienenden Thermoplast höhere Steifigkeit die auf den Wälzlagerkäfig einwirkenden Kräfte und Momente. Das als Matrix dienende Thermoplast bettet dabei die Fasern derart ein, dass diese räumlich fixiert werden, sodass in die Fasern eine Einleitung von Kräften möglich ist. Darüber hinaus stützt die Matrix die Fasern gegen mechanische Beschädigungen durch Knicke und andere Einflüsse.

Im Unterschied zu konventionellen faserverstärkten Thermoplasten wird bei Ausführungsbeispielen die Faserverstärkung durch Langfasern erzielt. Die Kohlenstofflangfaserverstärkung und/oder Glaslangfaserverstärkung kann hierbei durch Fasern gebildet werden, die eine mittlere Länge von wenigstens 1 mm aufweisen. Hierbei wird berücksichtigt, dass die Fasern eine statistische Verteilung aufweisen, deren Mittelwert wenigstens 1 mm beträgt, jedoch auch darüber liegen kann, also beispielsweise wenigstens 1.5 mm, wenigstens 2 mm oder wenigstens 2.5 mm betragen kann. Konventionelle Fasern, sogenannte Kurzfasern, weisen so eine mittlere Länge von weniger als 1 mm auf. Im Unterschied zu "Endlosfasern" weisen die Fasern bei Ausführungsbeispielen typischerweise eine mittlere Länge auf, die 50 mm nicht überschreiten, gegebenenfalls 30 mm oder gegebenenfalls 10 mm nicht übersteigt, um gegebenenfalls eine Anisotropie der mechanischen Belastbarkeiten zu reduzieren.

Bei einem Wälzlagerkäfig gemäß einem Ausführungsbeispiel kann die Kohlenstofflangfaserverstärkung und/oder Glaslangfaserverstärkung durch Fasern gebildet werden, wobei die Fasern wenigstens einen Anteil von 10% des Materials umfassen. Hierdurch kann es möglich sein, die Kraftübertragung in dem Wälzlagerkäfig auf eine Zahl von Fasern zu verteilen, was zu einer Verbesserung der Steifigkeit und/oder Zugfestigkeit und gleichzeitig zu einer Verbesserung der Zähigkeit und/oder Schlagfestigkeit führen kann. Bei weiteren Ausführungsbeispielen kann der Anteil der Fasern wenigstens 20%, wenigstens 30% oder wenigstens 40% betragen. Der Anteil kann ferner so bei dem Material gewählt sein, dass er einen Anteil von 80% oder auch von 70% nicht übersteigt. Hierdurch kann die Funktion des als Matrix dienenden Thermoplasts gegebenenfalls verbessert werden. Unter einem Anteil wird hierbei ein Masseanteil oder ein Volumenanteil verstanden.

Bei einem Wälzlagerkäfig gemäß einem Ausführungsbeispiel kann das Material eine Kerbschlagzähigkeit von wenigstens 20 kJ/m², eine Bruchspannung von wenigsten 200 MPa und ein Elastizitätsmodul von wenigstens 10 GPa aufweisen. Hierdurch kann es möglich sein, den Wälzlagerkäfig auch bei mechanisch stärker beanspruchten Anwendungen zu verwenden. Ausführungsbeispiele können je nach verwendetem Material ebenso eine Kerbschlagzähigkeit von wenigstens 28 kJ/m², eine Bruchspannung von wenigsten 280 MPa und ein Elastizitätsmodul von wenigstens 20 GPa aufweisen.

Bei einem Wälzlagerkäfig gemäß einem Ausführungsbeispiel kann die Kohlenstofflangfaserverstärkung und/oder Glaslangfaserverstärkung durch Fasern gebildet werden, die Kohlenstoff bzw. ein Glas aufweisen. Bei weiteren Ausführungsbeispielen kann das Thermoplast eine Kohlenstofflangfaserverstärkung umfassen, die durch Fasern gebildet wird, die Kohlenstoff aufweisen. Hierdurch können gegebenenfalls die genannten mechanischen Eigenschaften wenigstens teilweise verbessert werden. Auch kann gegebenenfalls durch eine Kohlenstofflangfaserverstärkung im Vergleich zu einer Glaslangfaserverstärkung eine Reduzierung des Wälzkörperverschleißes erzielt werden, da die Kohlenstofffasern eine geringere abrasive Wirkung als Glasfasern aufweisen können.

Bei einem Wälzlagerkäfig gemäß einem Ausführungsbeispiel kann das Thermoplast Polyamid (PA), teilaromatisiertes Polyamid, Polyetheretherketon (PEEK), Polyethersulfon (PES), Polyetherimid (PEI), ein Polyaryletherketon (PEAK), Polymethylmethacrylat (PMMA), Polyvinylchlorid (PVC), Acrylnitril-Butadien-Styrol (ABS), Polylactat (PLA), Polycarbonat (PC), Polyethylenterephthalat (PET), Polyethylen (PE), Polypropylen (PP), Polystyrol (PS), Polyphthalamiden (PPA), Polyacetal (POM), Polyphenylensulfid (PPS), Polyimid (PI), Polyamidimid (PAI), Polysulfone (PSU, PESU), Polyphenylenether (PPE), Polyarylamid (PAMXD6), Polybenzimidazol (PBI) oder flüssigkristalline Polymere (LCP) umfassen. Diese Thermoplaste können je nach Anwendungsfall des Wälzlagerkäfigs eine gute Abstimmung der mechanischen Eigenschaften im Hinblick auch auf eine wirtschaftliche Umsetzung ermöglichen.

Ein Wälzlagerkäfig gemäß einem Ausführungsbeispiel kann hierbei einstückig oder mehrstückig aus einer Mehrzahl von Wälzlagerkäfigsegmenten gebildet sein. Je nach Anwendungsfall und Ausführungsbeispiel kann so beispielsweise ein einstückiger oder einteiliger Wälzlagerkäfig ohne strukturell gegebenenfalls schwächend wirkende Verbindungsstrukturen geschaffen werden. Im Falle eines mehrstückig oder mehrteilig aus einer Mehrzahl von Wälzlagerkäfigsegmenten aufgebauten Wälzlagerkäfigs kann gegebenenfalls eine leichtere Bestückung des Wälzlagerkäfigs mit einem oder mehreren Wälzkörpern ermöglicht werden. Auch kann gegebenenfalls ein Einbau des Wälzlagerkäfigs in das Wälzlager hierdurch erleichtert werden. Hierbei kann ein Wälzlagersegment optional eine Verbindungsstruktur aufweisen, die ausgebildet ist, um das Wälzlagersegment mit einem weiteren Wälzlagersegment koppelbar oder verbindbar zu machen. Auch kann optional eine Tasche für einen Wälzkörper eines Wälzlagerkäfigs derart ausgestaltet sein, dass der Wälzkörper durch eine Form der Tasche gegen ein Herausfallen vollständig oder wenigstens in einer Richtung durch einen formschlüssigen Kontakt gesichert ist.

Ein Wälzlagerkäfig gemäß einem Ausführungsbeispiel kann genau aus einem Material gefertigt sein, also vollständig aus dem Material gefertigt sein. Anders ausgedrückt kann ein Wälzlagerkäfig aus dem Material bestehen.

Ein Wälzlagerkäfig gemäß einem Ausführungsbeispiel kann grundsätzlich für ein Linearwälzlager oder auch für ein Wälzlager zur Lagerung bzw. Führung einer Drehbewegung sein. Im Fall eines Wälzlagerkäfigs für ein Wälzlager zur Lagerung einer Drehbewegung kann der Wälzlagerkäfig eine ringförmige Struktur aufweisen, die sich über wenigstens 300° entlang eines Kreisbogens erstreckt. Optional kann der Wälzlagerkäfig auch geschlossen sein, sich also über 360° erstrecken.

Bei einem Ausführungsbeispiel kann ein Wälzlagerkäfig beispielsweise eine umlaufende Ringstruktur aufweisen, die einen oder mehrere Stege und/oder Krallen und/oder Stifte aufweist, um eine oder mehrere Taschen zur Aufnahme eines oder mehrerer Wälzkörper zu bilden. Ein Wälzlagerkäfig gemäß einem Ausführungsbeispiel kann ausgebildet sein, um einen Wälzkörper in Form einer Kugel, eines Zylinders, eines Kegels bzw. eines Kegelstumpfes, einer Nadel, einer Tonne oder einer anderen Form in einer Tasche aufzunehmen.

Bei einem Verfahren gemäß einem Ausführungsbeispiel kann das Formen des Wälzlagerkäfigs ein Spritzgießen des Wälzlagerkäfigs umfassen. Das Spritzgießen kann gegebenenfalls eine einfache und sichere Herstellung des Wälzlagerkäfigs ermöglichen.

Nachfolgend werden unter Bezugnahme auf die beigefügten Zeichnungen und Figuren Ausführungsbeispiele näher beschrieben und erläutert.
Fig. 1 zeigt eine schematische Seitenansicht eines Wälzlagerkäfigs gemäß einem Ausführungsbeispiel; und
Fig. 2 zeigt eine perspektivische Teildarstellung des Wälzlagerkäfigs aus Fig. 1.

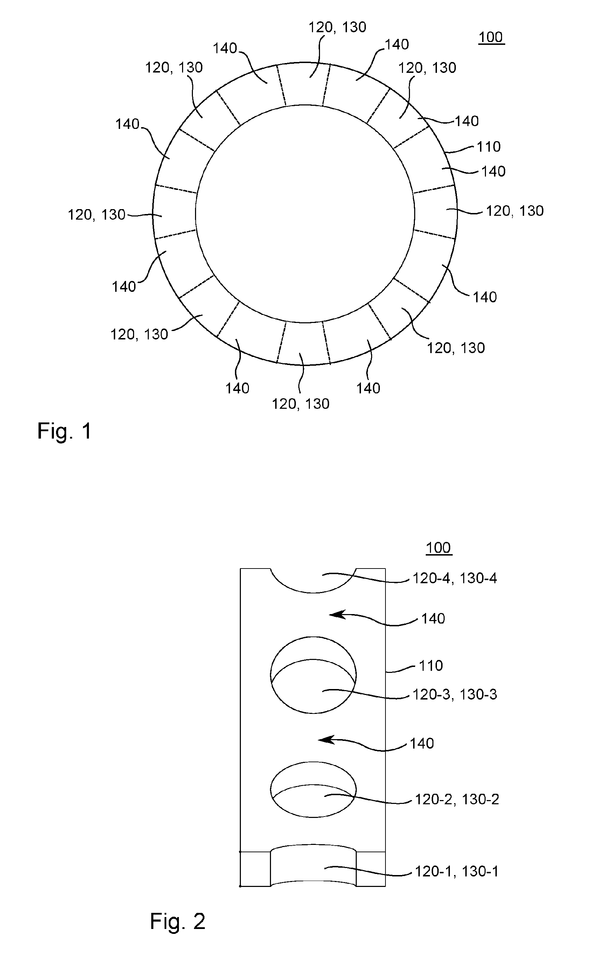

Bevor im Zusammenhang mit den Figuren 1 und 2 Ausführungsbeispiele näher beschrieben und hinsichtlich ihrer Funktionsweise näher erläutert werden, bietet es sich an, darauf hinzuweisen, dass im Rahmen der vorliegenden Beschreibung zusammenfassende Bezugszeichen für Objekte, Strukturen und andere Entitäten verwendet werden, wenn auf die betreffende Entität an sich, mehrerer entsprechende Entitäten innerhalb eines Ausführungsbeispiels oder innerhalb mehrerer Ausführungsbeispiele oder die betreffende Gattung von Entitäten näher eingegangen wird.

Hierdurch ist es möglich, die Beschreibung knapper und kürzer zu halten, da unnötige Wiederholungen vermieden werden können, da Beschreibungen die sich auf eine Entität beziehen, auch auf andere Entitäten in anderen Ausführungsbeispielen übertragbar sind, soweit dies nicht explizit anders angegeben ist oder sich aus dem Zusammenhang ergibt. Im Unterschied hierzu werden, wenn einzelne Entitäten bezeichnet werden, individuelle Bezugszeichen verwendet, die auf den entsprechenden zusammenfassenden Bezugszeichen basieren. Entitäten, die mehrfach in einem Ausführungsbeispiel oder in unterschiedlichen Ausführungsbeispielen auftreten, können hierbei bezüglich einiger ihrer technischen Parameter identisch und/oder unterschiedlich ausgeführt werden. Es ist so beispielsweise möglich, dass mehrere Entitäten innerhalb eines Ausführungsbeispiels bezüglich eines Parameters identisch, bezüglich eines anderen Parameters jedoch unterschiedlich ausgeführt sein können.

Fig. 1 zeigt eine schematische Seitenansicht eines Wälzlagerkäfigs 100 gemäß einem Ausführungsbeispiel zur Lagerung einer Drehbewegung. Der Wälzlagerkäfig 100 weist eine ringförmige Struktur 110 auf, die sich vollständig entlang einer Umfangsrichtung des Wälzlagerkäfigs 100, also über 360° erstreckt. Der Wälzlagerkäfig 100 weist darüber hinaus eine Mehrzahl kreisförmiger Ausnehmungen 120 auf, die eine entsprechende Anzahl von Taschen 130 für die in Fig. 1 nicht gezeigten Wälzkörper bilden. Hierbei ergeben sich zwischen jeweils zwei benachbarten Taschen 130 Stege 140.

Um dies näher zu zeigen, ist in Fig. 2 eine perspektivische Teildarstellung des Wälzlagerkäfigs 100 aus Fig. 1 gezeigt. Fig. 2 zeigt hierbei insgesamt vier Ausnehmungen 120, von denen eine erste Ausnehmung 120-1 und eine vierte Ausnehmung 120-4 aufgrund der in Fig. 2 gewählten Teildarstellung nur unvollständig wiedergegeben sind. Die Ausnehmungen 120 sind kreisförmig ausgebildet und schaffen daher entsprechende kreisförmige Taschen 130, die zur Aufnahme kugelförmiger Wälzkörper ausgebildet sind. Zwischen den Ausnehmungen 120, also zwischen den Taschen 130, bilden sich so die bereits in Fig. 1 gezeigten Stege 140 aus.

Diese weisen ausgehend von einem Rand der ringförmigen Struktur 110 eine zu seiner Mitte hin abnehmende Breite in der Umfangsrichtung der ringförmigen Struktur 110 und damit des Wälzlagerkäfigs 100.

Selbstverständlich können Ausführungsbeispiele auch in anderen Geometrien implementiert werden. So können beispielsweise die Ausnehmungen 120 bzw. die Taschen 130 abweichend von dem in den Figuren 1 und 2 gezeigten Ausführungsbeispiel nicht zentral in der ringförmigen Struktur 110, sondern seitlich versetzt entlang einer zu der Umfangsrichtung und einer radialen Richtung des Wälzlagerkäfigs 100 senkrechten Richtung angeordnet sein. Hierbei können die Ausnehmungen 120 beispielsweise soweit an eine äußere Begrenzung der ringförmigen Struktur 110 verlagert werden, dass die Ausnehmungen 120 nicht mehr kreisförmig, sondern lediglich ein kreissegmentförmig ausgeformt sind. In einem solchen Fall werden die Stege 140 auch als Krallen bezeichnet.

Ausführungsbeispiele von Wälzlagerkäfigen 100 umfassen auch solche für andere Wälzkörper bzw. andere Wälzkörperformen. Neben kugelförmigen Wälzkörpern (Kugeln) können so Wälzlagerkäfige 100 gemäß Ausführungsbeispielen auch für tonnenförmiger Wälzkörper, nadelförmige Wälzkörper, kegelförmige Wälzkörper bzw. kegelstumpfförmige Wälzkörper, tonnenförmiger Wälzkörper und nadelförmige Wälzkörper bereitgestellt werden.

Ein Wälzlagerkäfig 100 gemäß einem Ausführungsbeispiel kann hierbei einstückig oder mehrstückig aus einer Mehrzahl von Wälzlagerkäfigsegmenten gebildet sein. Im Falle einer einstückigen oder einteiligen Ausführung kann so gegebenenfalls eine strukturell schwächend wirkende Verbindungsstruktur vermieden werden. Dies kann jedoch gerade die Herstellung, Bestückung oder Montage bei einzelnen Typen von Wälzlagerkäfigen erschweren. Gerade im Bereich großer Wälzlagerkäfige 100 kann dies gegebenenfalls zutreffen.

Im Falle einer mehrstückigen oder mehrteiligen Ausführung mit einer Mehrzahl von Wälzlagerkäfigsegmenten aufgebauten Wälzlagerkäfigs 100 kann gegebenenfalls eine leichtere Bestückung des Wälzlagerkäfigs 100 mit einem oder mehreren Wälzkörpern ermöglicht werden. Auch kann gegebenenfalls ein Einbau des Wälzlagerkäfigs 100 in das Wälzlager hierdurch erleichtert werden. Hierbei kann jeweils ein Wälzlagersegment optional eine Verbindungsstruktur aufweisen, die ausgebildet ist, um das Wälzlagersegment mit einem weiteren Wälzlagersegment koppelbar oder verbindbar zu machen. So kann beispielsweise jedes Wälzlagerkäfigsegment einen Zapfen und eine Ausnehmung zur Aufnahme eines solchen Zapfens aufweisen. Die Wälzlagerkäfigsegmente eines Wälzlagerkäfigs 100 können hierbei identisch oder auch unterschiedlich ausgeführt sein.

Auch kann optional eine Tasche 130 für einen Wälzkörper eines Wälzlagerkäfigs 100 derart ausgestaltet sein, dass der Wälzkörper durch eine Form der Tasche 130 gegen ein Herausfallen vollständig oder wenigstens in einer Richtung durch einen formschlüssigen Kontakt gesichert ist.

Ein Wälzlager Käfig 100 kann sich - abweichend von den Fig. 1 dargestellten Ausführungsformen - in Umfangsrichtung auch über einen geringeren Winkel als 360° erstrecken. Anders ausgedrückt kann ein Wälzlagerkäfig 100 gegebenenfalls auch nicht geschlossen seien, erstreckt sich jedoch in einem solchen Fall typischerweise über wenigstens 320°.

Die ringförmige Struktur 110 kann darüber hinaus bei anderen Ausführungsbeispielen auch eine als wellenförmige oder mehrfach gebogene Struktur ausgeführt sein, sodass die Stege 140 bzw. Krallen durch wenigstens einen Abschnitt der ringförmigen Struktur 110 mit einer identischen oder nur geringfügig abweichenden Dicke gebildet werden. Eine solche Abweichung kann beispielsweise nicht größer als 30% sein.

Neben den in den Figuren 1 und 2 gezeigten Wälzlagerkäfigen 100 für Wälzlager, die zur Führung einer Drehbewegung ausgebildet sind, können Wälzlagerkäfige gemäß Ausführungsbeispielen auch für Linearführungen bzw. Linearwälzlager vorgesehen werden. In einem solchen Fall kann es ratsam sein, zumindest teilweise von der im Zusammenhang mit den Figuren 1 und 2 beschriebenen Ringform abzuweichen. So können diese Wälzlagerkäfige gegebenenfalls biegsam und/oder geradelinig ausgeführt sein.

Ausführungsbeispielen von Wälzlagerkäfigen 100 ist gemein, dass diese aus einem Material gefertigt sind, das ein Thermoplast mit einer Kohlenstofflangfaserverstärkung und/oder einer Glaslangfaserverstärkung umfasst. Wie bereits eingangs erläutert wurde, ermöglichen es die Langfaserverstärkung mechanische Eigenschaften zu erzielen, die mit konventionellen Thermoplasten mit einer konventionellen Faserverstärkung nicht gleichzeitig erzielbar sind.

So ermöglicht es das Material bei einem Ausführungsbeispiel eine verbesserten Steifigkeit und/oder Zugfestigkeit und gleichzeitig eine Verbesserung der Zähigkeit und/oder der Schlagfestigkeit dadurch zu erzielen, indem eine Langfaserverstärkung auf Basis von Glaslangfasern und/oder Kohlenstofflangfasern verwendet wird. Die die Langfaserverstärkung bildenden Fasern tragen aufgrund ihrer, im Vergleich zu dem als Matrix dienenden Thermoplast höheren Steifigkeit die auf den Wälzlagerkäfig einwirkenden Kräfte und Momente. Das als Matrix dienende Thermoplast bettet dabei die Fasern derart ein, dass diese räumlich fixiert werden, sodass in die Fasern eine Einleitung von Kräften möglich ist. Darüber hinaus stützt die Matrix die Fasern gegen mechanische Beschädigungen durch Knicke und andere Einflüsse.

Im Unterschied zu konventionellen faserverstärkten Thermoplasten weisen die Fasern der Langfaserverstärkung eine mittlere Länge von wenigstens 1 mm auf, wobei diese eine statistische Verteilung hinsichtlich der Länge aufweisen. Der Mittelwert beträgt also wenigstens 1 mm kann jedoch auch darüber liegen, also beispielsweise wenigstens 1.5 mm, wenigstens 2 mm oder wenigstens 2.5 mm betragen. Im Unterschied hierzu weisen konventionelle Kurzfasern eine mittlere Länge von weniger als 1 mm auf, während "Endlosfasern" mehr als 50 mm lang sind.

Numerische und zum Teil auch experimentelle Daten legen hierbei die Vermutung nahe, dass durch die größere Länge der Langfasern das als Matrix dienende Thermoplast weniger stark belastet wird, da die Kräfte besser über das Thermoplast auf die Langfasern übertragen werden. Es besteht daher die Vermutung, dass tendenziell längere Fasern auch eine größere mechanische Belastbarkeit des Materials ermöglichen.

Da sich allerdings mit zunehmender Faserlänge auch die Verarbeitbarkeit im Spritzgießverfahren verschlechtert, kann es ratsam sein, die Fasern hinsichtlich ihrer Länge auf höchstens 50 mm, gegebenenfalls auf höchstens 30 mm oder gegebenenfalls auf höchstens 10 mm zu begrenzen. So kann es beispielsweise bei Wälzlagerkäfigen zur Lagerung von Drehbewegungen ratsam sein, die Faserlängen zu begrenzen.

Die Langfasern bilden hierbei häufig einen Anteil von wenigstens 10% des Materials, um die Kraftübertragung in dem Wälzlagerkäfig auf eine größere Zahl von Fasern zu verteilen, was zu einer Verbesserung der Steifigkeit und/oder Zugfestigkeit und gleichzeitig zu einer Verbesserung der Zähigkeit und/oder Schlagfestigkeit führt. Auch hier deuten Untersuchungen an, dass mit tendenziell steigendem Anteil der Langfasern sich die mechanischen Eigenschaften zu verbessern scheinen. Das Material kann daher auch einen Langfaseranteil von wenigstens 30% oder von wenigstens 40% aufweisen. Um jedoch die Funktion des als Matrix dienenden Thermoplasts nicht negativ zu beeinflussen, kann der Faseranteil so gewählt sein, dass dieser 80% oder auch 70% nicht übersteigt. Unter einem Anteil wird hierbei ein Masseanteil oder ein Volumenanteil verstanden.

Bevor einzelne Ergebnisse präsentiert werden, kann zusammenfassend festgehalten werden, dass bei einem Wälzlagerkäfig 100 gemäß einem Ausführungsbeispiel das Material eine Kerbschlagzähigkeit von wenigstens 20 kJ/m², eine Bruchspannung von wenigsten 200 MPa und ein Elastizitätsmodul von wenigstens 10 GPa erreichen kann. Bei einigen Materialien können auch höhere Werte, beispielsweise eine Kerbschlagzähigkeit von wenigstens 28 kJ/m², eine Bruchspannung von wenigsten 280 MPa und ein Elastizitätsmodul von wenigstens 20 GPa erzielt werden.

Die Fasern umfassen Kohlenstoff bzw. ein Glas. Erste Untersuchungen scheinen darauf hinzudeuten, dass die Kohlenstofflangfaserverstärkungen tendenziell eher höhere mechanische Belastbarkeiten ermöglichen.

Bei einem Wälzlagerkäfig gemäß einem Ausführungsbeispiel kann das Thermoplast beispielsweise Polyamid (PA), teilaromatisiertes Polyamid, Polyetheretherketon (PEEK), Polyethersulfon (PES), Polyetherimid (PEI), ein Polyaryletherketon (PEAK), Polymethylmethacrylat (PMMA), Polyvinylchlorid (PVC), Acrylnitril-Butadien-Styrol (ABS), Polylactat (PLA), Polycarbonat (PC), Polyethylenterephthalat (PET), Polyethylen (PE), Polypropylen (PP), Polystyrol (PS), Polyphthalamiden (PPA), Polyacetal (POM), Polyphenylensulfid (PPS), Polyimid (PI), Polyamidimid (PAI), Polysulfone (PSU, PESU), Polyphenylenether (PPE), Polyarylamid (PAMXD6), Polybenzimidazol (PBI) oder flüssigkristalline Polymere (LCP) umfassen.

Hierbei können beide Typen der Langfaserverstärkung zunächst mit jedem der genannten Thermoplaste kombiniert werden. Das Material kann also Polyamid (PA), teilaromatisiertes Polyamid, Polyetheretherketon (PEEK), Polyethersulfon (PES), Polyetherimid (PEI), ein Polyaryletherketon (PEAK), Polymethylmethacrylat (PMMA), Polyvinylchlorid (PVC), Acrylnitril-Butadien-Styrol (ABS), Polylactat (PLA), Polycarbonat (PC), Polyethylenterephthalat (PET), Polyethylen (PE), Polypropylen (PP), Polystyrol (PS), Polyphthalamide (PPA), Polyacetal (POM), Polyphenylensulfid (PPS), Polyimid (PI), Polyamidimid (PAI), Polysulfone (PSU, PESU), Polyphenylenether (PPE), Polyarylamid (PAMXD6), Polybenzimidazol (PBI) oder flüssigkristalline Polymere (LCP) zusammen mit einer Kohlenstofflangfaserverstärkung umfassen. Ebenso kann es auch Polyamid (PA), teilaromatisiertes Polyamid, Polyetheretherketon (PEEK), Polyethersulfon (PES), Polyetherimid (PEI), ein Polyaryletherketon (PEAK), Polymethylmethacrylat (PMMA), Polyvinylchlorid (PVC), Acrylnitril-Butadien-Styrol (ABS), Polylactat (PLA), Polycarbonat (PC), Polyethylenterephthalat (PET), Polyethylen (PE), Polypropylen (PP), Polystyrol (PS), Polyphthalamide (PPA), Polyacetal (POM), Polyphenylensulfid (PPS), Polyimid (PI), Polyamidimid (PAI), Polysulfone (PSU, PESU), Polyphenylenether (PPE), Polyarylamid (PAMXD6), Polybenzimidazol (PBI) oder flüssigkristalline Polymere (LCP) mit einer Glaslangfaserverstärkung umfassen.

Ebenso kann es auch Polyamid (PA), teilaromatisiertes Polyamid, Polyetheretherketon (PEEK), Polyethersulfon (PES), Polyetherimid (PEI), ein Polyaryletherketon (PEAK), Polymethylmethacrylat (PMMA), Polyvinylchlorid (PVC), Acrylnitril-Butadien-Styrol (ABS), Polylactat (PLA), Polycarbonat (PC), Polyethylenterephthalat (PET), Polyethylen (PE), Polypropylen (PP), Polystyrol (PS), Polyphthalamide (PPA), Polyacetal (POM), Polyphenylensulfid (PPS), Polyimid (PI), Polyamidimid (PAI), Polysulfone (PSU, PESU), Polyphenylenether (PPE), Polyarylamid (PAMXD6), Polybenzimidazol (PBI) oder flüssigkristalline Polymere (LCP) mit einer Mischung aus einer Glaslangfaserverstärkung und einer Kohlenstofflangfaserverstärkung umfassen.

Diese Thermoplaste können je nach Anwendungsfall des Wälzlagerkäfigs eine gute Abstimmung der mechanischen Eigenschaften im Hinblick auch auf eine wirtschaftliche Umsetzung ermöglichen.

Ein Wälzlagerkäfig 100 gemäß einem Ausführungsbeispiel kann genau aus einem Material gefertigt sein, also vollständig aus dem Material gefertigt sein. Anders ausgedrückt kann ein Wälzlagerkäfig aus dem Material bestehen. So kann ein solcher Wälzlagerkäfig beispielsweise mithilfe eines Ausführungsbeispiels eines Verfahrens zum Herstellen eines Wälzlagerkäfigs 100 gefertigt werden.

Ein solches Ausführungsbeispiel umfasst so ein Bereitstellen des Materials, das ein Thermoplast mit einer Kohlenstofflangfaserverstärkung und/oder einer Glaslangfaserverstärkung umfasst, sowie ein Formen des Wälzlagerkäfigs 100 aus dem Material.

Der Schritt des Bereitstellens kann beispielsweise in Form eines Bestückens einer Spritzgießmaschine mit einem Granulat des jeweiligen Materials geschehen. Das Formen des Wälzlagerkäfigs 100 kann so ein Spritzgießen des Wälzlagerkäfigs 100 umfassen. Das Spritzgießen kann gegebenenfalls eine einfache und sichere Herstellung des Wälzlagerkäfigs 100 ermöglichen.

Dazu wird mit einer Spritzgießmaschine das Material, also das langfaserverstärkte Thermoplast, in einer Spritzeinheit der Spritzgießmaschine unter Druck und/oder einer erhöhten Temperatur plastifiziert und in ein Spritzgießwerkzeug eingespritzt. Der Hohlraum bzw. die Kavität des Spritzgießwerkzeugs bestimmt die Form und die Oberflächenstruktur des Wälzlagerkäfigs 100.

Die Temperaturen, bei denen das Spritzgießverfahren eingesetzt wird, hängen hierbei von der genauen Zusammensetzung des Materials, also beispielsweise von dem Thermoplast ab. Diese liegen jedoch im Bereich der Schmelztemperatur und darüber für das jeweilige Material.

Natürlich können auch andere Verfahren zur Herstellung des Wälzlagerkäfigs 100 gemäß einem Ausführungsbeispiel verwendet werden. Ein Ausführungsbeispiel umfasst so beispielsweise ein Formen mittels Extrusion oder Heißextrusion, Gießen, Pressen oder Sintern (z. B. Lasersintern).

Im Falle eines Ausführungsbeispiels eines Verfahrens zur Herstellung eines Wälzlagerkäfigs 100, das auf Basis eines Extrusions- oder auch eines Heißextrusionsverfahrens arbeitet, kann so das Bereitstellen des Materials ein Bereitstellen des langfaserverstärkten Thermoplasts in einer für den genauen Prozess, also beispielsweise für das Material und den Extruder geeigneten oder gegebenenfalls optimalen Form (Extrudat) umfassen.

Das Formen des Wälzlagerkäfigs 100 kann in diesem Fall mehrere Teilschritte umfassen. So kann zunächst in dem eigentlichen Extrusionsprozess aus dem Extrudat, also dem bereitgestellten Material, ein Rohkörper beispielsweise in Form eines extrudierten Rohrs, eines extrudierten Profils, einer extrudierten Platte oder einer anderen mittels Extrusion herstellbaren Basisform hergestellt werden. Die so mittels des Extrusionsprozesses erhaltene Grundform kann dann in einem oder mehreren weiteren optionalen mechanischen Bearbeitungsschritten zu dem Wälzlagerkäfig 100 weiterverarbeitet werden. Diese optionalen mechanischen Bearbeitungsschritte umfassen beispielsweise ein Fräsen, ein Bohren, ein Schleifen, ein Polieren oder ein Drehen der Basisform oder einer bereits weiterverarbeiteten Basisform. Anders ausgedrückt erzeugt der Extrusionsprozess ein Halbzeug, welches dann im Rahmen eines oder mehrerer weiterer mechanischen Bearbeitungsschritte (mechanisches Bearbeiten) zu dem Fertigzeug, nämlich dem Wälzlagerkäfig 100 weiterverarbeitet wird. Noch anders ausgedrückt kann das Formen des Wälzlagerkäfigs 100 aus extrudierten Rohren, Profilen oder Platten erfolgen.

Auch im Falle eines Ausführungsbeispiels des Verfahrens zum Herstellen eines Wälzlagerkäfigs 100, das ein Gießen oder Pressen umfasst, wird zunächst das Material bereitgestellt, welches dann im Rahmen des Formens des Wälzlagerkäfigs 100 zu dem Wälzlagerkäfig weiterverarbeitet wird. Je nach verwendetem Prozess kann es ratsam sein, das Material in einer für diesen Prozess wenigstens geeigneten, wenn nicht sogar optimalen Form bereitzustellen. Das eigentliche Formen des Wälzlagerkäfigs 100 umfasst dann ein Pressen oder Gießen des Materials. Je nach konkreter Prozessführung kann hierbei gegebenenfalls bereits der fertige Wälzlagerkäfig 100 entstehen. Bei anderen Ausführungsbeispielen kann auch zunächst wiederum ein Basiskörper bzw. ein Halbzeug, beispielsweise in Form gegossener oder gepresster Rohre, Profile, Blöcke oder anderer Basisformen entstehen. In einem solchen Fall kann die so gewonnene Basisform (Halbzeug) durch ein oder mehrere optionale mechanische Bearbeitungsverfahren, wie sie bereits oben genannt wurden, zu dem Fertigerzeugnis, also dem Wälzlagerkäfig 100 weiterverarbeitet werden.

Auch kann ein Ausführungsbeispiel ein Sintern oder Lasersintern umfassen. In diesem Fall kann das Bereitstellen des Materials beispielsweise ein Bereitstellen des langfaserverstärkten Thermoplasts als Pulvergemisch umfassen. Auch hier sind natürlich gegebenenfalls andere Formen, in denen das Material bereitgestellt wird, denkbar, soweit sie mit dem anzuwendenden Prozess wenigstens kompatibel sind. Das Formen des Wälzlagerkäfigs 100 kann dann das eigentliche Sintern oder Lasersintern umfassen. Hierbei ist es möglich, dass bereits hierbei der fertige Wälzlagerkäfig 100 entsteht. Häufig ist es jedoch auch hier so, dass zunächst ein Halbzeug (Basisform) entsteht, welches dann durch einen oder mehrere der oben bereits beschriebenen, optionalen mechanischen Bearbeitungsschritte zu dem Wälzlagerkäfig 100 weiterverarbeitet wird.

Die Verfahren, bei denen der Wälzlagerkäfig 100 bereits durch einen einzigen Prozessschritt im Rahmen des Formens des Wälzlagerkäfigs 100 entsteht, erfordern häufig den Einsatz eines typischerweise hoch belastbaren Spezialwerkzeugs, z. B. des Spritzgusswerkzeugs, dass hohen Drücken, Temperaturen oder anderen Prozessbedingungen widerstehen muss. Diese Anforderungen machen die Herstellung eines entsprechenden Werkzeugs häufig für einige Anwendungen unrentabel.

Daher werden beispielsweise bei einzelnen Wälzlagerkäfigen 100, Kleinserien entsprechender Wälzlagerkäfige 100 oder auch bei besonderen Anwendungsgebieten eher ein Verfahren rentabel einsetzbar sein, bei welchem zunächst ein Halbzeug gefertigt wird, welches dann durch ein ein- oder mehrstufiges mechanisches Bearbeitungsverfahren zu dem Fertigzeug weiterverarbeitet wird. Ein Anwendungsbereich, bei dem sowohl die Stückzahlen, als auch die mechanischen Belastungen, denen die Wälzlagerkäfige 100 unterworfen werden können, stellt beispielsweise der Spitzenrennsport dar.

Die Herstellung von Lagerkäfigen oder Wälzlagerkäfigen 100 aus thermoplastisch verarbeitbaren Kunststoffen mit einer Kohlenstofflangfaserverstärkung (C-LFT) kann so beispielsweise auf Basis eines Polyamids als Matrixmaterial umgesetzt werden. Bei einem dieser Materialien konnte, wie Untersuchungen gezeigt haben, eine Steigerung der Bruchspannung gegenüber einem vergleichbaren kurzkohlefaserverstärkten Compound-Material um 70% auf bis zu 300 MPa bei einer gleichzeitigen Verdoppelung der Kerbschlagzähigkeit auf bis zu 30 kJ/m erzielt werden. Bei Verwendung eines teilaromatischen Polyamids mit einer 30%-igen Langkohlenstofffaserverstärkung konnten so Verbesserungen der Werkstoffkennwerte gegenüber konventionell verwendeten Materialien erzielt werden, bei denen die Bruchspannung von etwa 120 MPa auf etwa 300 MPa, das E-Modul von etwa 6500 MPa auf etwa 23000 MPa und die Kerbschlagzähigkeit von etwa 10 kJ/m² auf etwa 30 kJ/m² gesteigert werden konnte. Eine Dichte dieses Materials kann hierbei im Bereich zwischen etwa 1.2 g/cm³ und 1.3 g/cm³ liegen.

Unter Verwendung eines mit 40% einer Kohlenstofflangfaserverstärkung versehenen Polyamids kann wahrscheinlich eine weitere Steigerung der mechanischen Kennwerte erzielt werden, auch wenn hierzu noch nicht alle Daten vorliegen.

Auf Basis eines Polyamids als Thermoplast zeigen erste Untersuchungen, dass Kerbschlagzähigkeiten von etwa 25 kJ/m² für einen 30%-igen Faseranteil und etwa 30kJ/m² für einen 40%-prozentigen Faseranteil erreichbar sind. Ebenso scheinen eine Bruchspannung von knapp unter 250 MPa im Fall eines 30%-igen Faseranteils, sowie ein E-Modul von etwa 18 GPa für den 30%-igen Faseranteil und 25 GPa für einen 30%-igen Faseranteil erreichbar zu sein.

Insgesamt scheinen so Steifigkeitszuwächse durch Ausführungsbeispiele von 60% und Bruchspannungserhöhungen von 70% bei einigen Materialkombinationen erreichbar zu sein.

Der Einsatz von Thermoplasten mit Kohlenstofflangfaserverstärkung für Wälzlagerkäfige 100 gemäß einem Ausführungsbeispiel ist jedoch bei Weitem noch nicht auf langfaserverstärkte Matrix-Thermoplaste Polyamid oder teilaromatisches Polyamid beschränkt. Auch andere Matrix-Thermoplaste, wie die oben angegebenen PEEK oder PES, können durch die Verwendung von Kohlenstofflangfasern oder Glaslangfasern in ihren Werkstoffkennwerten stark verbessert werden.

Bei Ausführungsbeispielen kann so durch die Verwendung der beschriebenen Materialien, also beispielsweise von C-LFT bei Wälzlagerkäfigen 100, Messung- oder Stahlblech substituierbar zu sein. So können Ausführungsbeispiele gegebenenfalls in großen Lagern zum Einsatz kommen, also beispielsweise bei LSB-Käfigsegmenten (LSB = Large Size Bearings = Großlager) oder bei Groß-CRB-Lagern (CRB = Cylinder Roller Bearing = Zylinderrollenlager). Auch können sie gegebenenfalls bei Lagern mit extrem hoher Drehzahl und bei Lagerarten zum Einsatz kommen, für die Kunststoffkäfige bisher kaum einsetzbar waren. Zu Letzteren zählen beispielsweise Pendelrollenlager (SRB = Spherical Roller Bearing), sowie CARB-Lager (CARB = Compact Aligning Roller Bearing = kompakte selbstausrichtende Wälzlager). Auch kann gegebenenfalls ein geringerer Wälzkörper- oder Rollenverschleiß durch im Vergleich zu Glasfasern weniger abrasiv wirkenden Kohlefasern erzielt werden.

### Bezugszeichenliste

- 100: Wälzlagerkäfig
- 110: ringförmige Struktur
- 120: Ausnehmung
- 130: Tasche
- 140: Steg

## Patentansprüche

1. Wälzlagerkäfig (100) zur Aufnahme eines Wälzkörpers, der wenigstens eine Tasche (130) für den Wälzkörper umfasst, wobei der Wälzlagerkäfig (100) aus einem Material gefertigt ist, das ein Thermoplast mit einer Kohlenstofflangfaserverstärkung und/oder einer Glaslangfaserverstärkung umfasst,
wobei das Thermoplast Polyamid, Polyetheretherketon, Polyethersulfon, Polyetherimid, ein Polyaryletherketone, Polymethylmethacrylat, Polyvinylchlorid, Acrylnitril-Butadien-Styrol, Polylactat, Polycarbonat, Polyethylenterephthalat, Polyethylen, Polypropylen, Polystyrol, Polyphthalamide, Polyacetal, Polyimid, Polyamidimid, Polysulfone, Polyphenylenether, Polyarylamid, Polybenzimidazol oder flüssigkristalline Polymere umfasst.

2. Wälzlagerkäfig (100) nach Anspruch 1, bei dem die Kohlenstoff- oder Glaslangfaserverstärkung durch Fasern gebildet wird, die eine mittlere Länge von wenigstens 1 mm aufweisen.

3. Wälzlagerkäfig (100) nach einem der vorhergehenden Ansprüche, bei dem die Kohlenstofflangfaserverstärkung oder Glaslangfaserverstärkung durch Fasern gebildet wird, wobei die Fasern wenigstens einen Anteil von 10% des Materials umfassen.

4. Wälzlagerkäfig (100) nach einem der vorhergehenden Ansprüche, bei dem das Material eine Kerbschlagzähigkeit von wenigstens 20 kJ/m², eine Bruchspannung von wenigsten 200 MPa und ein Elastizitätsmodul von wenigstens 10 GPa aufweist.

5. Wälzlagerkäfig (100) nach einem der vorhergehenden Ansprüche, bei dem die Kohlenstofflangfaserverstärkung oder Glaslangfaserverstärkung durch Fasern gebildet wird, die Kohlenstoff oder ein Glas aufweisen.

6. Wälzlagerkäfig (100) nach einem der vorhergehenden Ansprüche, bei dem das Thermoplast eine Kohlenstofflangfaserverstärkung umfasst, die durch Fasern gebildet wird, die Kohlenstoff aufweisen.

7. Wälzlagerkäfig (100) nach einem der vorhergehenden Ansprüche, der einstückig oder mehrstückig aus einer Mehrzahl von Wälzlagerkäfigsegmenten gebildet ist.

8. Verfahren zum Herstellen eines Wälzlagerkäfigs (100), umfassend:
Bereitstellen eines Materials, das ein Thermoplast mit einer Kohlenstofflangfaserverstärkung oder einer Glaslangfaserverstärkung umfasst; und
Formen des Wälzlagerkäfigs (100) aus dem Material.

9. Verfahren nach Anspruch 8, bei dem das Formen des Wälzlagerkäfigs (100) ein Spritzgießen des Wälzlagerkäfigs (100) umfasst.

10. Verfahren nach Anspruch 8, bei dem das Formen des Wälzlagerkäfigs (100) ein Extrudieren, ein Heißextrudieren, ein Gießen, ein Pressen, ein Sintern oder ein Lasersintern umfasst.

11. Verfahren nach Anspruch 10, bei dem bei dem Extrudieren, dem Heißextrudieren, dem Gießen, dem Pressen, dem Sintern oder dem Lasersintern zunächst ein Halbzeug gefertigt wird, und wobei das Formen des Wälzlagerkäfigs (100) ein mechanisches Bearbeiten des Halbzeugs umfasst, bei der der Wälzlagerkäfig (100) erzeugt wird.

12. Verfahren nach Anspruch 11, bei dem das Fertigen des Halbzeugs ein Fertigen des Halbzeugs in Form eines Rohrs, eines Profils, einer Platte oder eines Blocks ist.
